# EUROPEAN PATENT APPLICATION

(11) **EP 4 487 741 A1**
(43) Date of publication of application: **08.01.2025**
(21) Application number: 23762897.9
(22) Date of filing: 01.03.2023
(51) Int. Cl.: A47J 37/06, A47J 37/00

(54) **THREE-DIMENSIONAL HOT AIR CIRCULATION TYPE AIR FRYER**

(30) Priority: 03.03.2022 CN 202210209889; 17.11.2022 CN 202211462191
(71) Applicant: Joyoung Company Limited, Jinan, Shandong 250118 (CN)
(72) Inventor: ZHU, Zechun, Jinan, Shandong 250118 (CN); LOU, Wei, Jinan, Shandong 250118 (CN); CHEN, Long, Jinan, Shandong 250118 (CN); GUO, Hongwei, Jinan, Shandong 250118 (CN)
(74) Representative: advotec.
(86) International application number: PCT/CN2023/078912
(87) International publication number: WO 2023/165498

(57) **Abstract**

The present application provides a three-dimensional hot air circulation type air fryer, comprising a fryer body and a hot air assembly arranged above the fryer body. A baking tray is arranged in the fryer body; the baking tray comprises a baking tray body and a short edge formed by extending upwards from an edge of the baking tray body; the short edge and the side wall of the fryer body form a first air channel, the baking tray body and the bottom wall of the fryer body form a second air channel, and the first air channel is communicated with the second air channel; the baking tray body is provided with a through air return port; the ratio of the width of the first air channel to the radius of the fryer body is 0.05-0.2, and the ratio of the distance between the top of the short edge and the bottom wall of the fryer body to the height of the fryer body is 0.2-0.45. According to the air fryer of the present application, by reasonably setting the placement height of the baking tray, the heating balance of the upper and lower surfaces of a food material can be ensured, 360-degree three-dimensional heating of the food material is achieved, and there is no need to turn over the food material during the cooking process, so that a "no-turning-over" effect is achieved, and the user experience is improved.

## Description

The present application claims priorities to the following applications, the entire disclosures of which are incorporated herein by reference:
1. Chinese Patent Application No. 202210209889.9, titled "THREE-DIMENSIONAL HOT AIR CIRCULATION TYPE AIR FRYER", filed with the China National Intellectual Property Administration on March 03, 2022; and
2. Chinese Patent Application CN 202211462191.4, titled "AIR FRYER", filed with the China National Intellectual Property Administration on November 17, 2022.

### FIELD

The present application relates to the technical field of household appliances, and in particular to an air fryer.

### BACKGROUND

An air fryer is a cooking device that uses hot air to bake food, and has been favored by consumers in recent years. An air fryer generally includes a fryer body and a hot air assembly arranged above the fryer body, and the hot air assembly generates hot air to bake the food in the fryer body.

Chinese applications CN 200780029489.3 (International Publication No. WO 2007144432 A1), CN 201822277027.1, CN 201880004597.3 (International Publication No. WO 2019032876 A1) and their family applications disclose an air fryer having a double-layer fryer body. The hot air generated by the hot air assembly flows from an air passage formed between the frying basket and the side wall of the fryer body to the bottom of the baking tray for heating the food. In this type of air fryer, the airflow (or most of the airflow) is forced to only flow along the air passage to blow upward from the bottom of the fryer body, this solution has a relatively good effect on airflow circulation, the airflow is forced to contact with the lower surface of the food first, and the lower surface of the food can be baked well, however, the upper surface of the food cannot (or is very difficult to) be directly blown by the hot air, which easily causes a great difference in the baking effect between the upper and lower surfaces of the food. That is, an excessively forced circulating airflow is formed in the air fryer, leading to over-baking at the lower surface of the food, which is easy to cause uneven baking effects between the upper and lower surfaces of the food. In severe cases, because the lower surface of the food receives too much circulating airflow, the lower surface of the food may be burnt due to over-baking. Moreover, since the air fryer needs to form the air passage in the fryer body by using the frying basket, the space between the frying basket and the fryer body cannot be used for cooking, and the baking of food can only use the volume space of the frying basket itself, so the space utilization rate is low.

In order to solve the problem of insufficient heating of the upper surface and low space utilization of the air fryer with double-layer fryer body when cooking food, the applicant's application CN 202120635445.2 discloses an air fryer with a baking tray having a bent side, where a height of the bent side ranges from 10-50 mm (i.e., a short-side baking tray). A gap of 3-20 mm is formed between the bent side 36 of the baking tray and the side wall of the fryer body, which forms a relatively short air passage, and the hot air (or most of the hot air) is not forced to blow upward from the bottom of the fryer body along the air passage. Over-baking of the lower surface of the food has been significantly alleviated, and the problem of the short side of the baking tray occupying the space of the fryer body has also been solved, and the space utilization of the air fryer has been improved.

The application CN 202120635445.2 discloses a baking tray with short side and small gaps with the side wall, which can alleviate overcooking of the lower surface of the food, however, due to the volume of the air fryers on the market ranging from 3L to 8L, merely meeting the parameter requirements in the above application cannot guarantee that the upper and lower surfaces of the food can be cooked evenly. Moreover, the applicant found in subsequent researches that when a short-side baking tray was used to bake food, the hot air generated by the hot air assembly, when rotationally flowing and passing by the short side of the baking tray, would be divided by the short side of the baking tray. Part of the hot air got to the bottom of the baking tray through the air passage on the side wall, to heat the lower surface of the food, and the other part of the hot air blows toward the upper surface of the food. Therefore, the size and placement position of the baking tray greatly affect the distribution of hot air on the upper and lower sides of the baking tray. In view of this, it is needed to find the optimal size and placement position of the baking tray. When the requirements are met, the hot air can be reasonably distributed between the upper and lower sides of the baking tray, and the baking effect of the upper surface of the food under the action of heat radiation and hot air is close to the baking effect of the lower surface of the food under the action of hot air, and the food can be evenly heated on both sides.

### SUMMARY

In order to eliminate the influence of the volume of the air fryer on the cooking effect and find the optimal size and placement position of the baking tray to achieve uniform cooking, in the present application, the size and placement position of the baking tray are related to the size of the fryer body, so that air fryers with different volumes can achieve uniform baking by using the baking tray of the present application, which improves the cooking effect of the food. In order to solve the above technical problems, a three-dimensional hot air circulation air fryer is provided according to the present application, including:
a fryer body;
a hot air assembly;
a baking tray being placed in the fryer body, where the baking tray includes a baking tray body and a short side extending upward from an edge of the baking tray body, the baking tray body is provided with an air return hole running through the baking tray body, and a ratio of a distance between a top end of the short side and a bottom wall of the fryer body to a height of the fryer body ranges from 0.2 to 0.45;
a first air passage, where the first air passage is formed between the short side and a side wall of the fryer body, and a ratio of a width of the first air passage to a radius of the fryer body ranges from 0.05 to 0.2; and
a second air passage, where the second air passage is formed between the baking tray body and the bottom wall of the fryer body, a guide member is provided in the second air passage, when hot air generated by the hot air assembly flows to pass by the short side of the baking tray, the short side is configured to divide the hot air, part of the hot air blows toward an upper surface of the baking tray, and another part of the hot air enters the second air passage via the first air passage, and is guided by the guide member in the second air passage to blow toward a lower surface of the baking tray.

When the air fryer of the present application is working, the hot air generated by the hot air assembly will rotationally flow along the side wall of the fryer body under the action of the wall attachment effect. When passing by the short side of the baking tray, the hot air is divided by the short side of the baking tray, part of the hot air blows toward the upper surface of the food, and another part of the hot air enters the second air passage via the first air passage, and then guided by the guide rib in the second air passage to blow toward the lower surface of the food. Since the top end of the short side of the baking tray plays the role of dividing the hot air, the position of the top end of the short side of the baking tray determines the hot air distribution between the upper and lower sides of the baking tray. In the present application, the position and the size the baking tray are reasonably provided (regarding position, the ratio of the distance between the top end of the short side and the bottom wall of the fryer body to the height of the fryer body, indicated by H1/H, ranges from 0.2 to 0.45; regarding size, the ratio of the first air passage to the radius of the fryer body, indicated by L/R, ranges from 0.05 to 0.2), that is, the top end of the short side of the baking tray is provided at a reasonable position, so that the short-side baking tray can divide the hot air, to ensure the reasonable distribution of hot air on the upper and lower sides of the baking tray, and the baking effect of the upper surface of the food under the action of hot air and heat radiation is close to the baking effect of the lower surface of the food under the action of hot air, and the food can be evenly heated on both sides. Moreover, since the position and size of the short-side baking tray are related to the size of the fryer body, fryer bodies with different volumes can achieve the technical effect of uniform heating by using the baking tray according to the present application.

Preferably, an air-blocking plate for obstructing the rotation of hot air is provided in the first air passage, and rotation of the hot air entered the first air passage is obstructed by the air-blocking plate before the hot air entering the second air passage. The air-blocking plate for obstructing the hot air circumferential flowing is provided in the first air passage to reduce the circumferentially flowing air entering the second air passage, to avoid flow disturbance, so as to improve the bottom air inlet efficiency.

Preferably, the guide member is connected to the baking tray, and the guide member extends into the first air passage to form the air-blocking plate. The guide member is connected to the baking tray, and the part of the guide member extending into the first air passage serves as the air-blocking plate. The hot air in the first air passage, which is blocked by the guide member, will enter the second air passage along the guide member, forming rising hot air in the second air passage, which can effectively reduce the hot air disturbance, so as to improve the air inlet efficiency.

Preferably, the air-blocking plate extends obliquely along a rotation direction of the hot air. With the air-blocking plate being provided to incline along the rotation direction of the hot air, the air-blocking plate can gradually change the direction of the hot air, to prevent airflow disturbance, so as to improve the air inlet efficiency.

Preferably, the air-blocking plate and the baking tray are provided as split bodies. With the air-blocking plate and the baking tray being separately provided, the air-blocking plate and the baking tray can be detached for cleaning, which improves the user experience.

Preferably, the guide member and the air-blocking plate are arranged on an inner wall of the fryer body, and the baking tray is positioned between the guide member and the air-blocking plate. With the guide member and the air-blocking plate being arranged on the inner wall of the fryer body, and the baking tray being positioned in the space defined by the guide member and the air-blocking plate, the placement position of the baking tray is fixed, the air passages are fixed, and the baking effect is stable. The guide member and the air-blocking plate are arranged on the fryer body, the baking tray has a simple structure and is easy to clean.

Preferably, the first air passage includes a circumferential flow region which is upper and a diversion region which is lower; the circumferential flow region is configured for rotational flowing of the hot air, and the air-blocking plate is configured to completely obstruct rotation of the hot air in the diversion region. The first air passage includes the upper circumferential flow region and the lower diversion region, where the upper circumferential flow region can ensure that enough hot air enters the first air passage, and the circumferential flow of the hot air is obstructed by the air-blocking plate provided in the lower diversion region, to avoid the rotational flowing of the hot air in the second air passage, so as to improve the air inlet efficiency.

Preferably, a height of the diversion region is H3, where H3≥5 mm. The height of the diversion region is reasonably provided, so that enough hot air enters the first air passage and the rotation of the hot air can be effectively obstructed. In a case that H3 < 0.5 mm, the diversion region is too small, the rotation of the hot air cannot be completely obstructed by the air-blocking plate, there is rotating hot air existed in the second air passage, making it difficult to form the rising airflow, the lower surface of the food is difficult to be evenly heated, resulting in the poor cooking effect.

Preferably, a height of the second air passage is H2, where 5 mm≤H2≤25 mm. The height of the second air passage is reasonably provided, so that enough hot air enters the second air passage. In a case that H2<5 mm, the second air passage is too narrow, the air inlet resistance is large, the air inlet volume is small, and the heating efficiency of the food is low; in a case that H2>25 mm, the air inlet volume of the second air passage is too large, the hot air disturbance is prone to occur in the second air passage, making it difficult to form the rising hot air, which affects the heating effect of the food.

Preferably, an air-blocking area of the air-blocking plate gradually increases from top to bottom. With the area of the air-blocking plate gradually increasing from top to bottom, for the hot air entering the first air passage, due to the blocking effect of the air-blocking plate in the flowing process, the circumferentially flowing air which flows rotationally gradually decreases. Compared with sudden obstruction of the circumferential flowing, gradual obstruction of rotation of the hot air can reduce the occurrence of airflow disturbance, so as to improve the air inlet efficiency.

Beneficial effects of the present application are as follows. When the air fryer of the present application is working, the hot air generated by the hot air assembly will rotationally flow along the side wall of the fryer body under the action of the wall attachment effect. When passing by the short side of the baking tray, the hot air is divided by the short side of the baking tray, part of the hot air blows towards the upper surface of the food, and another part of the hot air enters the second air passage via the first air passage, and is guided by the guide rib in the second air passage to blow toward the lower surface of the food. Since the top end of the short side of the baking tray plays the role of dividing the hot air, the position of the top end of the short side of the baking tray determines the hot air distribution between the upper and lower sides of the baking tray. In the present application, the position and the size the baking tray are reasonably provided (regarding position, the ratio of the distance between the top end of the short side and the bottom wall of the fryer body to the height of the fryer body, indicated by H1/H, ranges from 0.2 to 0.45; regarding size, the ratio of the first air passage to the radius of the fryer body, indicated by L/R, ranges from 0.05 to 0.2), that is, the top end of the short side of the baking tray is provided at a reasonable position, so that the short-side baking tray can divide the hot air, to ensure the reasonable distribution of hot air on the upper and lower sides of the baking tray, and the baking effect of the upper surface of the food under the action of hot air and heat radiation is close to the baking effect of the lower surface of the food under the action of hot air, and the food can be evenly heated on both sides. Moreover, since the position and size of the short-side baking tray are related to the size of the fryer body, fryer bodies with different volumes can achieve the technical effect of uniform heating by using the baking tray according to the present application.

### BRIEF DESCRIPTION OF THE DRAWINGS

FIG. 1 is a schematic view showing the structure of an air fryer (where a guide member is omitted) according to a first embodiment of the present application;
FIG. 2 is a schematic view showing the structure of an air fryer (where a guide member is omitted) according to a second embodiment of the present application;
FIG. 3 is a schematic top view of the air fryer according to the second embodiment of the present application;
FIG. 4 is a schematic view showing the structure of an air fryer according to a third embodiment of the present application;
FIG. 5 is a schematic view showing a baking tray and a guide member according to the third embodiment of the present application in an assembled state;
FIG. 6 is a schematic view showing the structure of the guide member according to the third embodiment of the present application;
FIG. 7 is a schematic view showing the structure of a baking tray according to a fourth embodiment of the present application; and
FIG. 8 is a schematic view showing the structure of a guide member according to a fifth embodiment of the present application.

Reference numerals corresponding to components in the drawings are as follows:

| | | | |
|---|---|---|---|
| 1 | fryer body, | 2 | hot air assembly, |
| 21 | fan, | 22 | heating tube, |
| 3 | baking tray, | 31 | short side, |
| 32 | baking tray body, | 321 | air return hole, |
| 33 | flange, | 331 | air through hole, |
| 4 | air-blocking plate, | 5 | first air passage, |
| 51 | circumferential flow region, | 52 | diversion region, |
| 6 | second air passage, | 7 | guide member, |
| 71 | guide rib, | 711 | supporting foot, |
| 72 | | | fixing ring. |

### DETAILED DESCRIPTION OF THE EMBODIMENTS

In order to more clearly illustrate the overall concept of the present application, detailed description will be made hereinafter by examples in conjunction with the drawings.

In the following description, many specific details are illustrated to facilitate full understanding of the present application. However, the present application may also be implemented in other ways different from those described herein. Therefore, the protection scope of the present application is not limited to the specific embodiments disclosed below.

Besides, it should be noted in the description of the present application that, the orientation or positional relationships indicated by terms "central", "up", "down", "front", "rear", "left", "right", "vertical", "horizontal", "top", "bottom", "inner", "outer", "axial", "radial", "circumferential" and the like are based on the orientation or positional relationships shown in the drawings, and are merely for the convenience of describing the present application and the simplification of the description, which do not indicate or imply that the device or element referred to must be in a particular orientation, or be constructed and operated in a particular orientation, and therefore should not be construed as a limit to the scope of the present application. Positional relationships of "upstream", "downstream" and the like indicate the positional relationships in normal flowing of fluids.

In addition, the terms "first", "second" and the like are used for descriptive purposes only and should not be understood as indicating or implying relative importance or implicitly indicating the number of technical features indicated. Therefore, a feature defined as "first" or "second" may explicitly or implicitly include one or more of the features. In the description of this application, "plurality" means two or more, unless otherwise explicitly specified.

In the present application, terms "mount", "link", "connect" and "fix" should be understood broadly unless otherwise explicitly specified or defined. For example, it may be fixedly connected or detachably connected or integrally connected; it may be mechanically connected or electrically connected or communicatively connected; it may be directly connected or indirectly connected through an intermediate medium, or internal connection between insides of two components, or the interaction relationship between the two components. For those skilled in the art, the specific meaning of the above terms in the present application should be understood in the light of specific circumstances.

In the present application, unless otherwise explicitly specified or defined, a first feature being "on" or "under" a second feature may refer to direct contact between the first and second features, or indirect contact between the first and second features via another feature between them. In the description of this application, the description with reference to the terms "one embodiment", "some embodiments", "example", "specific example", or "some examples" means that the specific features, structures, materials or characteristics described in conjunction with the embodiment or example are included in at least one embodiment or example of the present application. In this application, the schematic expression of the above terms does not necessarily refer to the same embodiment or example. Moreover, the specific features, structures, materials or characteristics described may be combined in any one or more embodiments or examples in an appropriate manner.

### First Embodiment

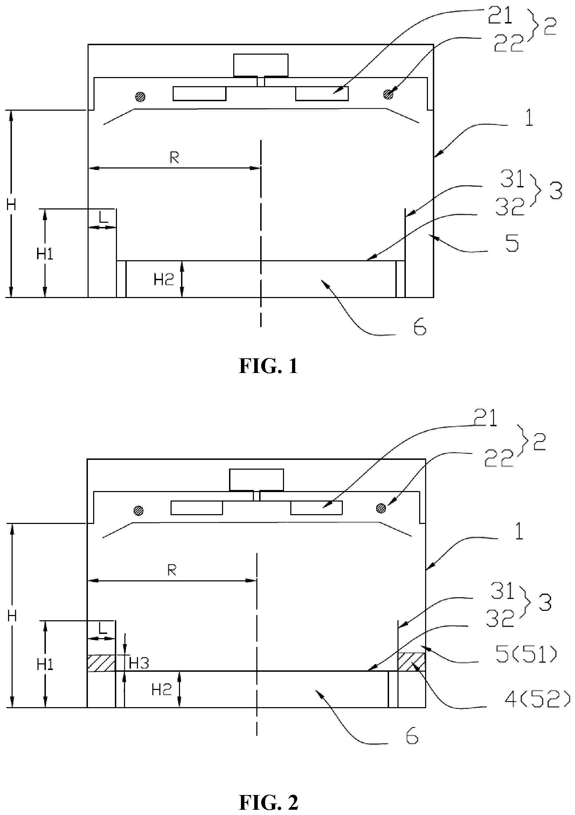

As shown in FIG. 1, an air fryer is provided according to the present embodiment, including a fryer body 1 and a hot air assembly 2, the hot air assembly 2 is arranged above the fryer body 1, and a baking tray 3 for holding food is provided inside the fryer body 1. The baking tray 3 includes a baking tray body 32 and a short side 31 extending upward from an edge of the baking tray body 32. A first air passage 5 is formed between the short side 31 and a side wall of the fryer body 1, and a second air passage 6 is formed between the baking tray body 32 and a bottom wall of the fryer body 1. An air return hole 321 is provided in a bottom wall of the baking tray body 32. A distance between the short side 31 of the baking tray 3 and the bottom wall of the fryer body 1 is indicated by H1, a height of the fryer body 1 is indicated by H, where 0.2≤H1/H≤0.0.45. A width of the first air passage 5 is indicated by L, a radius of the fryer body 1 is indicated by R, where 0.05≤L/R≤0.2.

When the air fryer of the present application is working, the hot air generated by the hot air assembly 2 will rotationally flow along the side wall of the fryer body 1 under the action of the wall attachment effect. When passing by the short side 31 of the baking tray 3, the hot air is divided by the short side 31 of the baking tray 3, part of the hot air blows toward the upper surface of the food, and another part enters the second air passage via the first air passage 5 to blow toward the lower surface of the food. Since the position and the size the baking tray 3 are reasonably provided in the present application (regarding position, the ratio of the distance between the top end of the short side 31 and the bottom wall of the fryer body 1 to the height of the fryer body 1, indicated by H1/H, ranges from 0.2 to 0.45; regarding size, the ratio of the first air passage 5 to the radius of the fryer body 1, indicated by L/R, ranges from 0.05 to 0.2), the short-side baking tray 3 can divide the hot air, to ensure reasonable distribution of hot air on the upper and lower sides of the baking tray 3, thus the baking effect of the upper surface of the food under the action of hot air and heat radiation is close to the baking effect of the lower surface of the food under the action of hot air, and the food can be evenly heated on both sides. Moreover, since the position and size of the short side 31 baking tray 3 are related to the size of the fryer body 1, fryer bodies 1 with different volumes can achieve the technical effect of uniform heating by using the baking tray 3 according to the present application.

In the process that the hot air generated by the hot air assembly 2 rotationally flow downward along the side wall of the fryer body 1, the flow rate gradually slows down, and the hot air gradually diffuses toward the center of the fryer body 1. Therefore, the position of the top end of the short side 31 of the baking tray 3 (that is, the windward position) is crucial for dividing the hot air. When the value of H1/H is between 0.2 and 0.45, the hot air can be evenly distributed on the upper and lower sides of the baking tray 3. When the size of the baking tray 3 is certain, if H1/H is too large, that is, the position of the short side 31 of the baking tray 3 is too high, too much hot air will enter the first air passage 5, and then blows from the second air passage 6 toward the lower surface of the food, and the lower surface of the food will be over-baked; if H1/H is too small, that is, the position of the short side 31 of the baking tray 3 is too low, too much hot air will escape to the upper surface of the baking tray 3, while too little hot air enters the first air passage 5, and the upper surface of the food will easily be over-baked. Similarly, when the placement position of the baking tray 3 is certain, if the baking tray 3 is too large (L/R is too small), the first air passage 5 will be too narrow, and it is difficult for the hot air to enter the first air passage 5, and the lower surface of the food will easily be under-baked; if the baking tray 3 is too small (L/R is too large), the first air passage 5 will be too wide, too much hot air enters the first air passage 5 and then blows from the second air passage 6 toward the lower surface of the food, the lower surface of the food will be over-baked, besides, too little food can be accommodated by the too small baking tray 3, which is disadvantage to utilization of the space.

Table 1 shows proportions of moderate color of French fries corresponding to different L/R values. It can be seen from the table that when L/R≥0.05, the proportions of moderate color of French fries are all greater than 50%, which indicates a good cooking effect. In order to take into account both the cooking effect and the user experience, L/R is preferably between 0.05 and 0.2. This is because when L/R<0.05, the width of the first air passage 5 is too small, and the hot air flow entering the first air passage 5 is small, and the lower surface of the food is easy to be under-baked, resulting in a poor cooking effect; when L/R>0.2, the holding area of the baking tray 3 is too small to cook more food.

**Table 1: Proportions of moderate color of French fries corresponding to different L/R values**

| | | | | | | | |
|---|---|---|---|---|---|---|---|
| L/R | 0 | 0.02 | 0.04 | 0.05 | 0.08 | 0.10 | 0.14 |
| Proportion of moderate color | 27% | 30% | 33% | 51% | 55% | 69% | 77% |
| L/R | 0.16 | 0.18 | 0.20 | 0.22 | 0.24 | 0.26 | 0.3 |
| Proportion of moderate color | 82% | 83% | 84% | 85% | 85% | 85% | 85% |

In this embodiment, the hot air assembly 2 includes a heating tube 22 and a fan 21 arranged below the heating tube 22. The wind caused by the rotation of the fan 21 is heated by the heating tube 22 and blown toward the fryer body 1 to bake the food in the fryer body 1. Specifically, the fan 21 is a centrifugal fan 21, and the heating tube 22 is arranged below the fan 21. The centrifugal fan 21 has the characteristics of axial air inlet and circumferential air outlet. When the fan 21 rotates, it makes the hot air circumferentially rotate, the hot air will flow along the side wall of the fryer body 1 due to the "wall attachment effect", then flow radially inward along the bottom wall of the fryer body 1 and then flow upward to be re-inhaled into the fan 21 to form hot air circulation. Further, an air guide hood is arranged above the fryer body 1, and the air guide hood can guide the hot air outputted by the fan 21, so that the hot air can flow downward along the side wall of the fryer body 1, to reducing the hot air disturbance in the fryer body 1. It is worth noting that in some other embodiments, the hot air assembly 2 may also adopt other structures, such as to omit the heating tube 22 by using a self-heating fan 21.

In this embodiment, hole opening and forming of the baking tray 3 are realized by cold plate stamping, and a hole-opening ratio of the air return holes 321 is greater than or equal to 40%. If the hole-opening ratio of the air return holes 321 is lower than 40%, the resistance to upward flowing of the hot air is large, and the lower surface of the food cannot be fully heated, which affects the cooking effect.

In this embodiment, the height of the second air passage 6 is indicated by H2, where 5 mm≤H2≤25 mm. The second air passage 6 is provided to have a reasonable height, allowing enough hot air to enter the second air passage 6. When H2<5 mm, the second air passage 6 is too narrow, the air inlet resistance is relatively large, the air inlet volume is small, and the heating efficiency of the food is low; when H2>25 mm, the air inlet volume of the second air passage 6 is too large, and the hot air disturbance is apt to occur in the second air passage 6, making it difficult to form the rising airflow, which affects the heating effect of the food.

In this embodiment, the baking tray 3 for holding food is provided in the fryer body 1. The baking tray 3 includes the baking tray body 32 and the short side 31 extending upward from the baking tray body 32. The baking tray body 32 has the air return hole 321 running through the baking tray body. The baking tray 3 is semi-suspended inside the fryer body 1. The first air passage 5 is formed between the short side 31 and the side wall of the fryer body 1, the second air passage 6 is formed between the baking tray body 32 and the bottom wall of the fryer body 1, and the first air passage 5 is in communication with the second air passage 6. The short side 31 of the baking tray 3 is able to divide the hot air, so that part of the hot air blows to the upper surface of the food, and the other part of the food blows to the lower surface of the food, in this way, both the upper and lower surfaces of the food can be blown by the hot air, making the cooking effect better. Moreover, the short side 31 can restrict the food, and prevent the food from blocking the air passage, which improves the reliability of the cooking process.

In this embodiment, a guide member is provided in the second air passage, and the guide member can guide the hot air entering the second air passage, so that the hot air blows toward the lower surface of the baking tray. It can be understood that the second air passage may be or may not be provided with the guide member, with the guide member, the upper and lower surfaces of the food can be baked more evenly.

It can be understood that H1/H may be 0.2, 0.3, 0.45, etc.

It can be understood that L/R may be 0.05, 0.1, 0.15, 0.2, etc.

It can be understood that H2 may be 5 mm, 10 mm, 15 mm, 25 mm, etc.

### Second Embodiment

Compared with the first embodiment, a specific structure of an air fryer is provided according to the present embodiment.

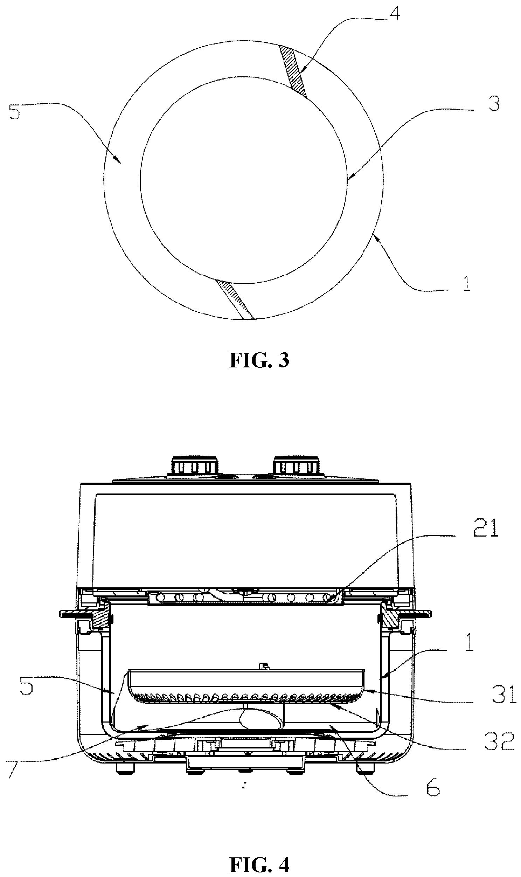

As shown in FIG. 2 and FIG. 3, in this embodiment, an air-blocking plate 4 is provided in the first air passage 5, and the air-blocking plate 4 can obstruct the rotation of the hot air in the first air passage 5. The hot air entering the first air passage 5 is blocked by the air-blocking plate 4, and flows along the air-blocking plate 4 into the second air passage 6, and then blows to the food on the baking tray 3 via the air return hole 321, which shortens the air inlet path, and thereby improving the air inlet efficiency. Furthermore, since the circumferentially flowing air entering the second air passage 6 is reduced, a rising airflow is easily formed in the second air passage 6, further improving the air inlet efficiency.

In this embodiment, the first air passage 5 is divided into a circumferential flow region 51 and a diversion region 52 from top to bottom. In the circumferential flow region 51, the hot air can flow along the side wall of the fryer body 1 in a rotating manner. When the hot air flows from the circumferential flow region 51 to the diversion region 52, the air-blocking plate 4 in the diversion region 52 can completely obstruct the rotation of the hot air. The hot air is obstructed immediately after flowing into the diversion region 52, and can only flow into the second air passage 6 along the air-blocking plate 4.

In this embodiment, a height of the diversion region 52 is indicated by H3, where H3 ≥5 mm. The height of the diversion region 52 is reasonably provided, to allow enough hot air to enter the first air passage 5 and effectively obstruct the circumferential flowing of the hot air. When H3<0.5 mm, the diversion region 52 is too small, the rotation of the hot air cannot be completely obstructed by the air-blocking plate 4, and there is rotating hot air in the second air passage 6, which makes it difficult to form rising airflow, and the lower surface of the food cannot be evenly heated, resulting in a poor cooking effect.

In this embodiment, the air-blocking plate 4 is detachably connected to the baking tray 3. After cooking, the air-blocking plate 4 can be removed and cleaned separately, which improves the user experience. In this embodiment, the air-blocking plate 4 may be made of plastic or silicone material. It can be understood that in other embodiments, the air-blocking plate 4 may be mounted on the inner wall of the fryer body 1, or may be detachably mounted in the first air passage 5 as a separate member.

In this embodiment, in order to reduce the hot air disturbance, the air-blocking plate 4 is inclined along the rotation direction of the hot air. The inclined air-blocking plate 4 can gradually change the direction of the hot air, to prevent airflow disturbance, so as to improve the air inlet efficiency.

In this embodiment, the area of the air-blocking plate 4 gradually increases from top to bottom. For the hot air entering the first air passage 5, due to the blocking effect of the air-blocking plate 4 in the flowing process, the circumferentially flowing air which flows rotationally gradually decreases. Compared with sudden obstruction of the circumferential flow, gradual obstruction of rotation of the hot air can reduce the occurrence of airflow disturbance, so as to improve the air inlet efficiency. That is, the area of the air-blocking plate 4 gradually increases from top to bottom, and reaches the maximum in the diversion region 52, thus the air-blocking plate 4 is able to be in contact with the short side 31 of the baking tray 3 and the side wall of the fryer body 1 at the same time, and the circumferential flow can be completely obstructed.

It can be understood that H3 may be 5 mm, 8 mm, 10 mm, etc., as long as H3≥5 mm is satisfied.

Other structures and effects of the air fryer described in this embodiment are the same as those of the first embodiment, which will not be described in detail.

### Third Embodiment

Compared with the second embodiment, another air fryer is provided according to the present embodiment.

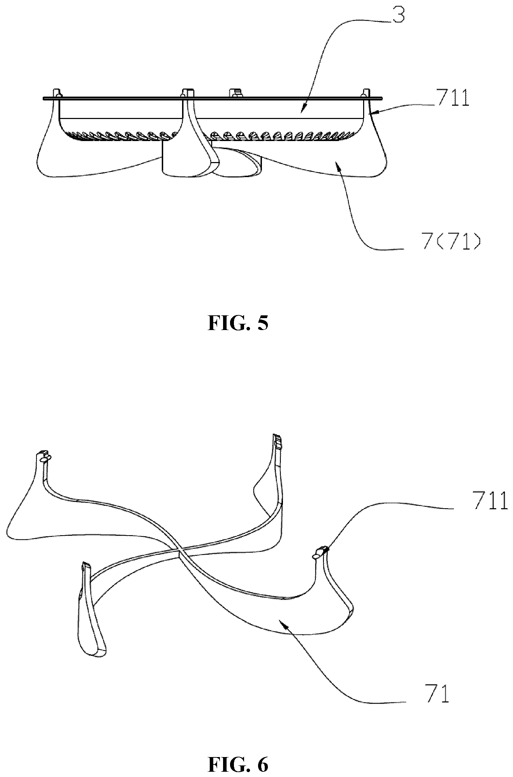

As shown in FIGS. 4 to 6, a guide member 7 is provided between the baking tray body 32 and the bottom wall of the fryer body 1, and the guide member 7 is provided with a guide rib 71, and the guide rib 71 extends to the diversion region 52 to form the air-blocking plate 4. On the one hand, the guide member 7 can guide the hot air in the second air passage 6, so that the hot air in the second air passage 6 can flow orderly under the action of the guide member 7, which reduces airflow disturbance, and thereby improving heat exchange efficiency. On the other hand, the portion of the guide rib 71 extending into the diversion region 52 can act as the air-blocking plate 4, which can obstruct the rotation of the hot air in the diversion region 52, so that there is no rotationally flowing hot air in the second air passage 6, making it easier to form rising hot air. When the air fryer is in use, under the action of the guide rib 71, the hot air entering the diversion region 52 cannot flow in an rotating manner, and will instead flow along the surface of the guide rib 71 under the action of the "wall attachment effect", and then flow into the second air passage 6 along the guide rib 71. After mixing with the hot air flowing into the second air passage 6 from other directions, the airflow flows upward under the action of the guide rib 71 and blows toward the lower surface of the food.

In this embodiment, the guide rib 71 extends into the diversion region 52 and the circumferential flow region 51 in turn, and the portion of the guide rib 71 extending into the diversion region 52 acts as the air-blocking plate 4, which can obstruct the rotation of the hot air in the diversion region 52. The area of the portion of the air-blocking plate 4 extending to the circumferential flow region 51 (that is, the portion of the guide rib 71 extending to the circumferential flow region 51) gradually increases from top to bottom. In the circumferential flow region 51, as the hot air flows, the volume of the circumferentially flowing air gradually decreases due to the blocking effect of the air-blocking plate 4, and circumferentially flowing air is completely obstructed until it enters the diversion region 52. Compared with the sudden obstruction of the circumferential flow, gradual obstruction of the circumferential flow can reduce the occurrence of airflow disturbance, which improves the air inlet efficiency.

In this embodiment, the guide member 7 includes multiple guide ribs 71, and the multiple guide ribs 71 extend along the radial direction of the fryer body 1 respectively. The multiple guide ribs 71 each have one end being fixedly connected together, and the other end extends upward to form a supporting foot for mounting the baking tray 3. The baking tray 3 can be inserted in a mounting space defined by the support feet of the multiple guide ribs. The guide member 7 can serve as a support for the baking tray 3, and the baking tray 3 is mounted on the guide member 7 to allow the second air passage 6 be formed between the baking tray body 32 and the bottom wall of the fryer body 1.

In this embodiment, the guide member 7 is detachably connected to the baking tray 3, and the guide member 7 is separately provided with respect to the bottom wall of the fryer body 1. The user can take the baking tray 3 together with the guide member 7 out of the fryer body 1, which facilitates cleaning of the fryer body 1 and the baking tray 3. In other embodiments, the guide member 7 may also be connected to the baking tray 3 by means of buckles, screws, welding, etc. In some other embodiments, the guide member 7 may be arranged on the bottom wall of the fryer body 1, and the specific connection structure is not limited. In other embodiments, when the guide member 7 and the wind air-blocking plate 4 are both arranged on the bottom wall of the fryer body 1, the baking tray 3 is limited in the space defined by the guide member 7 and the air-blocking plate 4. Of course, in the case that the air-blocking plate 4 is formed by extending a tail end of the guide member 7, the baking tray 3 is still be positioned in the space defined by the air-blocking plate 4 and the guide member 7 (the rest of the guide member 7 except the air-blocking plate 4).

In this embodiment, the guide member 7 abuts against a corner of the fryer body 1 and in contact with both the bottom wall and side wall of the fryer body 1. When the air fryer is working, the hot air flowing along the bottom wall and side wall of the fryer body 1 forms rising hot air under the action of the guide ribs 71, which improves the heat exchange efficiency, and thereby improving the cooking effect. Moreover, the guide member 7 abuts against the bottom wall and side wall of the fryer body 1 at the same time, and the bottom wall and side wall of the fryer body 1 can limit the guide member 7, and further limit the baking tray 3, to ensure that the baking tray 3 is mounted in the appropriate position.

Other structures and effects of the air fryer described in this embodiment are the same as those of the first embodiment, which will not be described in detail.

### Fourth Embodiment

Compared with the first embodiment, yet another air fryer is provided according to the present embodiment.

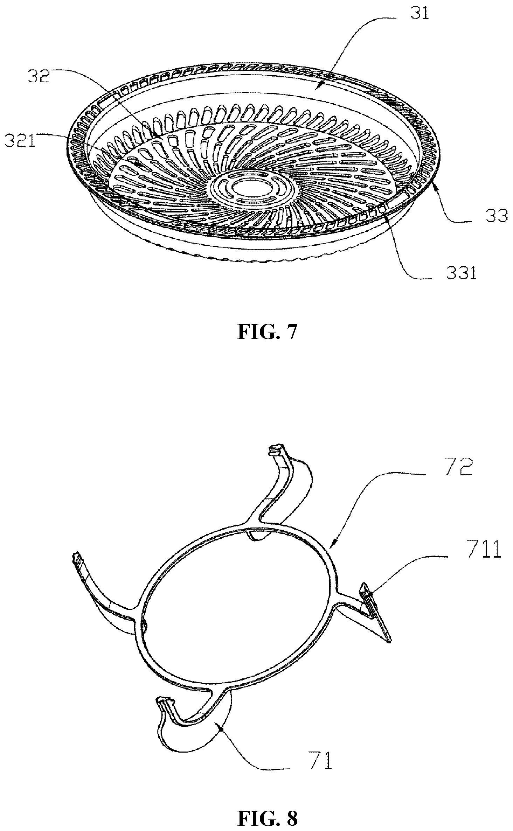

As shown in FIG. 7, a baking tray 3 is placed in the fryer body 1 of the air fryer. The baking tray 3 includes a baking tray body 32 and a short side 31 extending upward from the edge of the baking tray body 32. A first air passage 5 is formed between the short side 31 and the side wall of the fryer body 1, a second air passage 6 is formed between the baking tray body 32 and the bottom wall of the fryer body 1, and the first air passage 5 is in communication with the second air passage 6. The baking tray body 32 is further provided with an air return hole 321 running through the baking tray body. An edge of the short side 31 extends outward to form a flange 33, and the flange 33 is provided with an air through hole 331 running through the flange. The flange 33 can at least partially block the first air passage 5, to prevent food from blocking the first air passage 5, so as to improve the reliability of air intake. Furthermore, since air through holes 331 are provided in the flange 33, the hot air can enter the first air passage 5 via the air through holes 331, which alleviates the obstruction of the flange 33 to the hot air. Moreover, the air through holes 331 will change the direction of the hot air entering the first air passage 5, weakening the hot air circumferential flow in the first air passage 55, which improves the air inlet efficiency, and thereby improving the cooking effect of the food.

In this embodiment, an opening ratio of the air through holes 331 on the flange 33 is greater than or equal to 50%. When the opening ratio of the air through holes 331 is less than 50%, the obstruction of the flange 33 to the hot air is relatively strong, and the volume of the hot air entering the first air passage 5 is relatively small, the bottom of the food cannot be fully cooked, and the upper and lower surfaces of the food cannot be cooked evenly, which affects the user experience.

In this embodiment, the air through holes 331 are each obliquely provided, and the oblique direction of the air through hole 331 is the same as the rotation direction of the hot air. With the air through hole 331 being provided to oblique along the rotation direction of the hot air, the air through hole 331 can break the obstruction to the hot air, to ensure that enough hot air enters the first air passage 5 via the air through hole 331, so that the upper and lower surfaces of the food can be evenly heated, leading to a good heating effect.

Other structures and effects of the air fryer described in this embodiment are the same as those of the first embodiment, which will not be described in detail.

### Fifth Embodiment

Compared with the fourth embodiment, another guide member 7 is provided according to the present embodiment.

As shown in FIG. 8, in this embodiment, a flow guide 7 is arranged between the baking tray body 32 and the bottom wall of the fryer body 1. The flow guide 7 includes an annular fixing ring 72, and multiple guide ribs 71 are connected to the fixing ring 72. The multiple guide ribs 71 extend along radial directions of the fryer body 1, and multiple guide ribs 71 each has one end being connected to the fixing ring 72, and the other end extends upward to form the air-blocking plate 4. The baking tray 3 is mounted in the mounting space defined by the multiple air-blocking plates 4.

Other structures and effects of the air fryer described in this embodiment are the same as those of the first embodiment, which will not be described in detail.

Those described above are only preferred embodiments of the present application and are not intended to limit the scope of implementation of the present application. That is, all equivalent changes and modifications made according to the present application are deemed to fall in the scope of the claims of the present application, which will not be listed herein.

## Claims

1. A three-dimensional hot air circulation type air fryer, comprising:
a fryer body;
a hot air assembly;
a baking tray being placed in the fryer body, wherein the baking tray includes a baking tray body and a short side extending upward from an edge of the baking tray body, the baking tray body is provided with an air return hole running through the baking tray body, and a ratio of a distance between a top end of the short side and a bottom wall of the fryer body to a height of the fryer body ranges from 0.2 to 0.45;
a first air passage, wherein the first air passage is formed between the short side and a side wall of the fryer body, and a ratio of a width of the first air passage to a radius of the fryer body ranges from 0.05 to 0.2; and
a second air passage, wherein the second air passage is formed between the baking tray body and the bottom wall of the fryer body, and a guide member is provided in the second air passage; when hot air generated by the hot air assembly flows to pass by the short side of the baking tray, the short side is configured to divide the hot air, to allow part of the hot air to blow toward an upper surface of the baking tray, and another part of the hot air to enter the second air passage via the first air passage, to be guided by the guide member in the second air passage to blow toward a lower surface of the baking tray.

2. The three-dimensional hot air circulation type air fryer according to claim 1, wherein an air-blocking plate configured for obstructing rotation of the hot air is provided in the first air passage, and rotation of the hot air entered the first air passage is obstructed by the air-blocking plate before the hot air entering the second air passage.

3. The three-dimensional hot air circulation type air fryer according to claim 2, wherein the guide member is connected to the baking tray, and the guide member extends into the first air passage to form the air-blocking plate.

4. The three-dimensional hot air circulation type air fryer according to claim 3, wherein the air-blocking plate extends obliquely along a rotation direction of the hot air.

5. The three-dimensional hot air circulation type air fryer according to any one of claims 2 to 4, wherein the air-blocking plate and the baking tray are provided as split bodies.

6. The three-dimensional hot air circulation type air fryer according to claim 2, wherein the guide member and the air-blocking plate are arranged on an inner wall of the fryer body, and the baking tray is positioned between the guide member and the air-blocking plate.

7. The three-dimensional hot air circulation type air fryer according to claim 2, wherein the first air passage includes a circumferential flow region which is upper and a diversion region which is lower; the circumferential flow region is configured for rotational flowing of the hot air, and the air-blocking plate is configured to completely obstruct rotation of the hot air in the diversion region.

8. The three-dimensional hot air circulation type air fryer according to claim 7, wherein a height of the diversion region is indicated by H3, wherein H3≥5 mm.

9. The three-dimensional hot air circulation type air fryer according to claim 1, wherein a height of the second air passage is indicated by H2, wherein 5 mm≤H2≤25 mm.

10. The three-dimensional hot air circulation type air fryer according to claim 2, wherein an air-blocking area of the air-blocking plate gradually increases from top to bottom.
